# EUROPEAN PATENT SPECIFICATION

(11) **EP 1 738 267 B1**
(45) Date of publication and mention of the grant of the patent: **20.06.2012**
(21) Application number: 05725802.2
(22) Date of filing: 16.03.2005
(51) Int. Cl.: G06F 13/12, G06F 13/38

(54) **SYSTEM AND METHOD FOR ORGANIZING DATA TRANSFERS WITH MEMORY HUB MEMORY MODULES**
SYSTEM UND VERFAHREN ZUM ORGANISIEREN VON DATENTRANSFERS MIT SPEICHER-HUB-SPEICHERMODULEN
SYSTEME ET PROCEDE POUR ORGANISER DES TRANSFERTS DE DONNEES AU MOYEN DE CONCENTRATEUR MEMOIRE ET DE MODULES MEMOIRES

(30) Priority: 18.03.2004 US 804608
(43) Date of publication of application: 03.01.2007
(73) Proprietor: Micron Technology, Inc., Boise, ID 83716-9632 (US)
(72) Inventor: RENICK, Kirsten, St. Paul, Minnesota 55105 (US)
(74) Representative: Klunker . Schmitt-Nilson . Hirsch
(86) International application number: PCT/US2005/008865
(87) International publication number: WO 2005/089418

(56) References cited:
- EP-A- 1 176 769
- EP-A- 1 199 850
- US-A- 5 748 629
- US-A- 5 887 187
- US-A1- 2003 229 770
- US-B1- 6 778 546
- TANNENBAUM: "Computer Networks Third Edition (SONET/SDH Chapter)" 1996, PRENTICE HALL INTERNATIONAL , XP002458284 ISBN: 0-13-394248-1 * page 121 - page 130 *

## Description

### CROSS-REFERENCE TO RELATED APPLICATIONS

The present application claims the priority of PCT /US2005/008865.

### TECHNICAL FIELD

The present invention relates to processor-based systems, and more particularly, to processor-based systems having a memory module with a memory hub coupling several memory devices to a processor or other memory access device.

### BACKGROUND OF THE INVENTION

Processor-based systems, such as computer systems, use memory devices, such as dynamic random access memory ("DRAM") devices, as system memory to store instructions and data that are accessed by a processor. In a typical computer system, the processor communicates with the system memory through a processor bus and a memory controller. The processor issues a memory request, which includes a memory command, such as a read command, and an address designating the location from which data or instructions are to be read or to which data or instructions are to be written. The memory controller uses the command and address to generate appropriate command signals as well as row and column addresses, which are applied to the system memory. In response to the commands and addresses, data is transferred between the system memory and the processor. The memory controller is often part of a system controller, which also includes bus bridge circuitry for coupling the processor bus to an expansion bus, such as a PCI bus.

Although the operating speed of memory devices has continuously increased; this increase in operating speed has not kept pace with increases in the operating speed of processors. Even slower has been the increase in operating speed of memory controllers coupling processors to memory devices. The relatively slow speed of memory controllers and memory devices limits the data bandwidth between the processor and the memory devices.

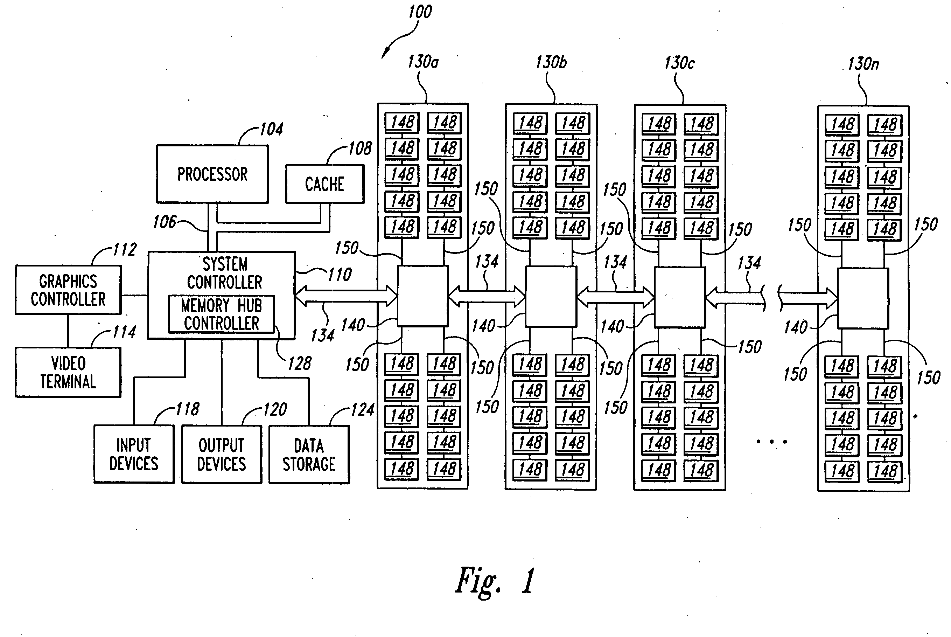

One approach to increasing the data bandwidth to and from memory devices is to use multiple memory devices coupled to the processor through a memory hub as shown in Figure 1. A computer system 100 using a memory hub architecture includes a processor 104 for performing various computing functions, such as executing specific software to perform specific calculations or tasks. The processor 104 includes a processor bus 106 that normally includes an address bus, a control bus, and a data bus. The processor bus 106 is typically coupled to cache memory 108, which, is typically static random access memory ("SRAM"). Finally, the processor bus 106 is coupled to a system controller 110, which is also sometimes referred to as a bus bridge.

The system controller 110 contains a memory hub controller 128 that is coupled to the processor 104. The memory hub controller 128 is also coupled to several memory modules 130a-n through a bus system 134. Each of the memory modules 130a-n includes a memory hub 140 coupled to several memory devices 148 through command, address and data buses, collectively shown as bus 150. The memory hub 140 efficiently routes memory requests and responses between the controller 128 and the memory devices 148. Computer systems employing this architecture can have a higher bandwidth because the processor 104 can access one memory module 130a-n while another memory module 130a-n is responding to a prior memory access. For example, the processor 104 can output write data to one of the memory modules 130a-n in the system while another memory module 130a-n in the system is preparing to provide read data to the processor 104. The operating efficiency of computer systems using a memory hub architecture can make it more practical to vastly increase data bandwidth of a memory system. A memory hub architecture can also provide greatly increased memory capacity in computer systems.

The system controller 110 also serves as a communications path to the processor 104 for a variety of other components. More specifically, the system controller 110 includes a graphics port that is typically coupled to a graphics controller 112, which is, in turn, coupled to a video terminal 114. The system controller 110 is also coupled to one or more input devices 118, such as a keyboard or a mouse, to allow an operator to interface with the computer system 100. Typically, the computer system 100 also includes one or more output devices 120, such as a printer, coupled to the processor 104 through the system controller 110. One or more data storage devices 124 are also typically coupled to the processor 104 through the system controller 110 to allow the processor 104 to store data or retrieve data from internal or external storage media (not shown). Examples of typical storage devices 124 include hard and floppy disks, tape cassettes, and compact disk read-only memories (CD-ROMs).

A memory hub architecture can greatly increase the rate at which data can be stored in and retrieved from memory because it allows memory requests in each of several memory modules 130 to be simultaneously serviced. In fact, a memory system using several memory modules each containing a memory hub can collectively transmit and receive data at such a high rate that the bus system 134 can become the "bottleneck" limiting the data bandwidth of the memory system.

Two techniques have been used to maximize the data bandwidth of memory systems using a memory hub architecture. First, rather than using traditional address, data and control buses, the address, data and control bits for each memory request or "transaction" are sent together in a single packet. The packet includes a command header followed by read or write data. The command header includes bits corresponding to a memory command, such as a write or a read command, identifying bits that specify the memory module to which the request is directed, and address bits that specify the address of the memory devices 148 in the specified memory module that is being accessed with the request. The command header may also specify the quantity of read or write data that follows the command header. The use of a packetized memory system allows the memory hub controller 128 to issue a memory request by simply transmitting a packet instead of transmitting a sequence of command, address and, in the case of a write request, write data signals. As a result, the memory hub controller 128 can issue memory requests at a faster rate. Furthermore, a packetized memory system frees the memory hub controller 128 from having to keep track of the processing of each memory request. Instead, the memory hub controller 128 need only transmit the packet. The memory hub 140 in the memory module 130 to which the memory request is directed then processes the memory request without further interaction with the memory hub controller 128. In the case of a read request, the memory hub 140 transmits a packet back to the memory hub controller 128, either directly or through intervening memory modules 130, that contains the read data as well as identifying bits in a command header identifying the read data. The memory hub controller 128 uses the identifying bits to associate the read data with a specific memory request.

The second technique that has been used to maximize the data bandwidth of memory systems using a memory hub architecture is to implement the bus system 134 using separate high-speed "downstream" and "upstream" buses (not shown in Figure 1). The high-speed downstream bus couples data from the memory hub controller 128 to the memory modules 130 and from the memory modules 130 to memory modules 130 located further away from the memory hub controller 128. The high-speed upstream bus couples data from memory modules 130 to the memory hub controller 128 and from the memory modules 130 to memory modules 130 located closer to the memory hub controller 128.

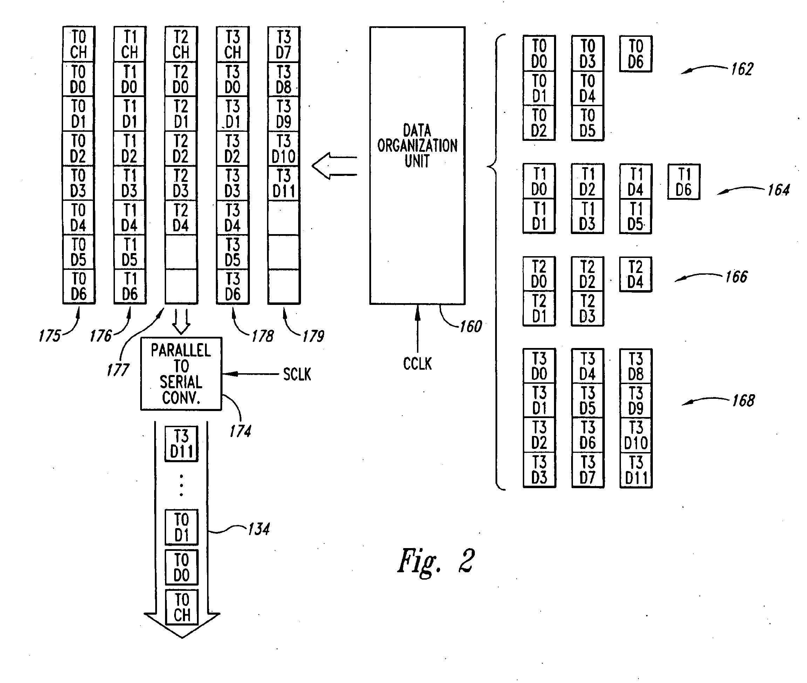

One approach to forming packets for a memory hub system that has been proposed will now be explained with reference to Figure 2 in which several 32-bit groups of data from each of several memory accesses or "transactions" are shown in the right hand side of Figure 2. Transaction T0 consists of 7 32-bit groups D0-D6 of data, which are coupled to a data organization unit 160 on a 96-bit bus 162. The bus 162 is therefore capable of coupling three 32-bit groups of data to the data organization 162 each cycle of a core clock CCLK signal, *i*.*e*., a clock signal that is used internally in the memory hubs 140. Transaction T1 also consists of 7 32-bit groups D0-D6 of data, and it is coupled to a data organization unit 160 on a 64-bit bus 164, which is capable of coupling two 32-bit groups of data to the data organization 162 each CCLK cycle. Transaction T2 consists of only 5 32-bit groups D0-D4 of data, and it is also coupled to a data organization unit 160 on a 64-bit bus 166 two 32-bit groups each CCLK cycle. Finally, transaction T3 consists of 12 32-bit groups D0-D11 of data, and it is coupled to a data organization unit 160 on a 128-bit bus 168, which is capable of coupling four 32-bit groups of data to the data organization 162 each CCLK cycle. It can therefore be seen that components in the memory hub 140 outputting data on respective buses having different widths can interface with the data organization unit 160.

As proposed, after the groups of data for transactions T0-T3 have been clocked into a data organization unit 160, they are re-organized into respective packets. The packets are clocked out of the data organization unit in parallel, and then coupled to a parallel-to-serial converter 174, which then outputs the packet in up to 8 32-bit groups of data DO-D7. In the embodiment shown in Figure 2, the data are clocked out of the parallel-to-serial converter 174 by a high-speed system clock SCLK signal. The quantity of data transmitted from the data organization unit 160 will depend on the relative frequency between the core clock signal and the system clock signal as well as the width of the bus 134. The system may be designed so that various internal busses of various widths may be coupled to the data organization unit 160. As a result, a memory hub 140 may be designed with a core clock frequency dictated by advances in technology or specific characteristics of a system, and the system clock frequency may have been dictated by its own unique design restraints. In the embodiment shown in Figure 2, the system clock signal has a frequency of eight times the frequency of the core clock.

Each packet includes a 32-bit command header followed by the 32-bit groups of data in the transaction. The 32-bit groups, known as "lanes," which are clocked out of the data organization unit 160 in parallel. The groups of lanes for each of the transactions T0-T3 are also shown in Figure 2. The number of lanes of data clocked out of the parallel-to-serial converter 174 for each period of the system clock signal will depend on the width of the high-speed bus system 134 (in this example, 32 bits).

Although the use separate downstream and upstream buses and memory packets organized as explained with reference to Figure 2 would be instrumental in increasing the data bandwidth to and from the memory modules 130, the data bandwidth would still sometimes be less than optimal because the size of a packet for a transaction may be less than the capacity of the high speed bus system 134 particularly since the quantity of data in each packet may vary. With further reference to Figure 2, the 32-bit groups of data for each transaction are arranged in packets. As explained above, the 32-bit command header CH is inserted before the first 32-bit group of data for each transaction. Since transaction T0 consists of 7 32-bit groups of data D0-D6, the command header CH plus the data in transaction T0 occupies all 8 lanes of a first lane group 175. As a result, all 8 lanes of the high-speed bus system 134 would be used. Similarly, since transaction T1 also consists of 7 32-bit groups of data D0-D6, all 8 lanes of a second lane group 176 would be occupied. Consequently, all 8 lanes of the high-speed bus system 134 would again be filled. However, since transaction T2 consists of only 5 32-bit groups of data D0-D4, only 6 lanes (the command header plus the 5 32-bit groups of data in transaction T2) of a third lane group 177 would be occupied. The 2 vacant lanes in the third lane group 177 would result in the high-speed bus system 134 not carrying any packet data during two periods of the high-speed system clock signal.

Transaction T3 consists of 12 32-bit groups of data D0-D11 so that the first 7 32-bit groups of data D0-D6 in transaction T3 (plus the 32-bit command header) would fill all 8 lanes of a fourth lane group 178. As a result, the high-speed bus system 134 would be fully occupied. However, the remaining 5 32-bit groups of data D7-D11 would occupy only 5 of 8 lanes of a fifth lane group 179. Therefore, data would not be coupled through the high-speed bus system 134 for 3 periods of the system clock signal. As a result, the data bandwidth of the memory system may be significantly less than the data bandwidth that could be achieved if all 8 lanes of the high-speed bus system 134 were always filled.

Although the data organization method has been described with respect to a computer system having specific bus widths, groups of data having specific sized, etc., it will be understood that the same or similar problems would exist for computer systems having other design parameters.

There is therefore a need for a system and method that organizes the data coupled to or from memory modules in a memory hub system in a manner that allows the full capacity of one a high-speed memory bus system to be utilized.
In US 5,887,187 A there is disclosed a single chip network adapter apparatus which includes a host interface circuit which is adapted for connection directly to a host system bus. The host interface circuit sends information to and receives information from the host system bus, and has a random access memory coupled thereto. A processor is coupled to the random access memory and formats information received from the host system bus to a network protocol format.
In Tannenbaum: "Computer Networks 3rd. Edition (SONET SDH chapter)" 1996, Prentice Hall International, XP002458284 ISBN: 0-13-394248-1 there is disclosed a technique of reorganising multiple data streams into a single data stream in the context of time division multiplexing. As shown in Fig. 2-28, data having the same format are combined into a single data stream wherein the multiplexing system arranges correspondingly positioned data bytes of parallel data into a serial data stream.

### SUMMARY OF THE INVENTION

The invention is directed to a system and method as defined in the independent claims.

A memory hub for a memory module includes a system for organizing memory transactions transmitted by the memory module. The organizing system organizes the memory transactions into packets each of which includes a command header and data, which may have a variable number of data bits. The organizing system organizes the command header and data into lane groups each of which includes a plurality of lanes. Each of the lanes contains a plurality of parallel command header bits or parallel data bits. The organizing system organizing the lane groups so that all of the lanes in each lane group are filled with either command header bits or data bits. The organizing system if further operable to convert each of the lane groups into a serial stream of the lanes for transmission from the memory hub. Each of the transmitted lanes contains either a plurality of parallel command header bits or parallel data bits.

### BRIEF DESCRIPTION OF THE DRAWINGS

Figure 1 is a block diagram of a computer system having a memory hub controller that is coupled to several memory modules having a memory hub architecture.

Figure 2 is a schematic diagram illustrating one approach that has been proposed for organizing data that is coupled to and from the memory modules shown in Figure 1.

Figure 3 is a schematic diagram illustrating one approach for organizing data for coupling to and from the memory modules shown in Figure 1 according to one example of the present invention.

Figure 4 is a block diagram of a memory hub that is capable of reorganizing data as shown in Figure 3, which may be used in the memory modules of Figure 1.

Figure 5 is a block diagram of a data organization system that can be used in a memory hub controller, the memory hub of Figure 4 or some other memory hub design.

### DETAILED DESCRIPTION OF THE INVENTION

Embodiments of the present invention are directed to a memory hub controller coupled to several memory hub modules through a high-speed downstream bus and a high-speed upstream bus. More particularly, embodiments of the present invention are directed to a system and method in which data are organized prior to be coupled to the downstream and upstream buses so that substantially all of the capacity of the buses are utilized. Certain details are set forth below to provide a sufficient understanding of various embodiments of the invention. However, it will be clear to one skilled in the art that the invention may be practiced without these particular details. In other instances, well-known circuits, control signals, and timing protocols have not been shown in detail in order to avoid unnecessarily obscuring the invention.

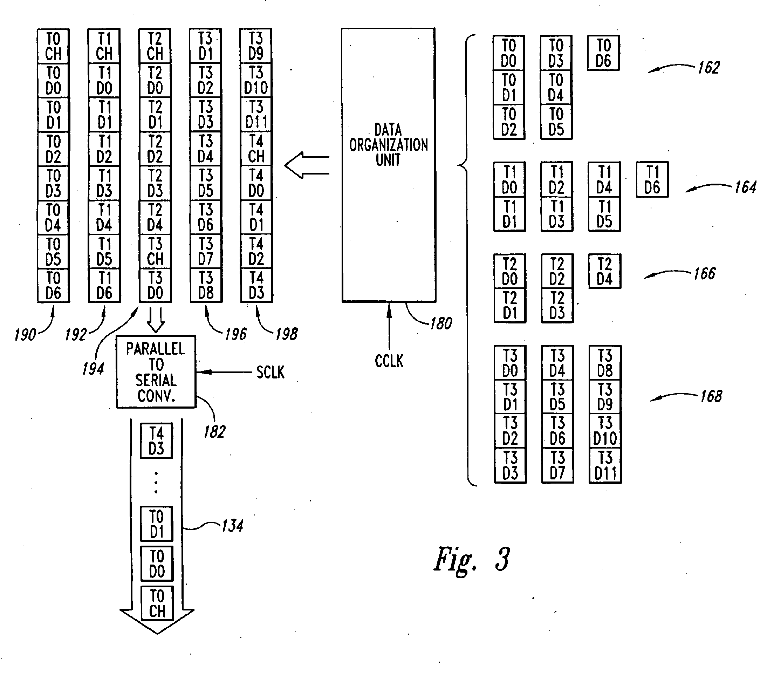

A method of forming packets for a memory hub system according to one example of the present invention will now be explained with reference to Figure 3. As shown in Figure 3, several 32-bit groups of data from each of several memory accesses or "transactions" are identical to those shown in Figure 2 for purposes of illustrating the differences therebetween except that a portion of an additional transaction T4 is shown in Figure 3. As before, transaction T0 consists of 7 32-bit groups of data D0-D6, transaction T1 also consists of 7 32-bit groups of data D0-D6, transaction T2 consists of 5 32-bit groups of data D0-D4, and transaction T3 consists of 12 32-bit groups of data DO-D11.

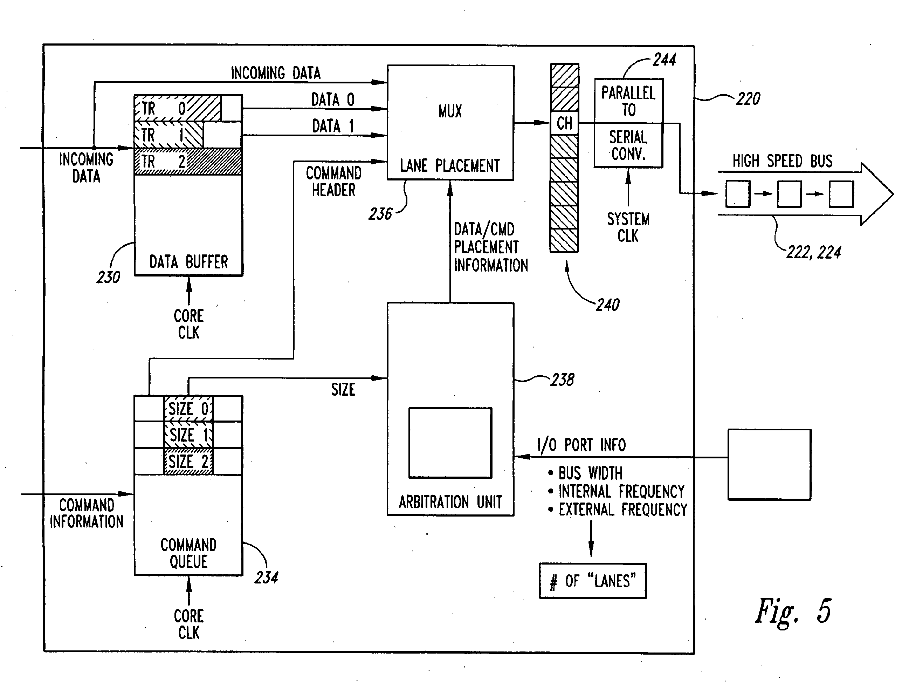

According to one example of the present invention, the groups of data for the transactions T0-T4 are clocked into a data organization unit 180 (explained with reference to Figure 5) responsive to the core clock signal, where they are re-organized into respective packets. In the example of Figure 3, each packet also includes a 32-bit command header CH followed by the 32-bit groups of data in the transaction. As before, the 32-bit groups or lanes are clocked out of the data organization unit 180 in parallel and then converted to serial data by a parallel-to-serial converter 182 responsive to the system clock signal.

Transactions T0 and T1, which each consists of the command header plus 7 32-bit groups of data D0-D6, occupy all 8 lanes of the first lane group 190 and the second lane group 192, respectively, in the same manner as explained above with reference to Figure 2. Similarly, transaction T2 again consists of only 5 32-bit groups of data D0-D4 so that only 6 lanes (the command header plus the 5 32-bit groups of data in transaction T2) of a third lane group 194 are filled. However, the 3 subsequent lanes of the third lane group 194 that were left vacant in the example of Figure 2 are instead filled by the command header CH and the first 32-bit group of data D0 for transaction T3. As a result, a full lane of data is coupled through the high-speed bus system 134 during respective periods of the system clock signal.

With further reference to Figure 3, the next 8 groups of data D1-D8 of transaction T3 are used to fill all 8 lanes of a fourth lane group 196 so that the high-speed bus system 134 is fully utilized. The remaining 3 lanes carrying data D9-D11 for transaction T3 are placed in a fifth lane group 198. Significantly, however, the remaining 5 lanes in the fifth lane group 198 are filled with the 32-bit command header CH and the first 4 32-bit groups of data D0-D3 for the transaction T4. In like manner, the command header and data for a memory transaction always immediately follows the data from a prior transaction so that the high-speed bus system 134 is fully utilized. Therefore, assuming there is data from a memory transaction that is waiting to be coupled through the high-speed bus system 134, there are never any idle periods in the bus system 134. As a result, the data bandwidth of the memory system is maximized.

Another advantage to the data organization unit 180 of Figure 3 is that the number of lanes of data in each lane group 190-198 can be configured based on the frequency of the CCLK signal and the frequency of the system clock SCLK clocking data from the parallel to serial converter 182 as well as the width of the external bus 134 and possibly other factors. Therefore, a memory hub 140 may be designed with a CCLK frequency dictaged by advances in technology or specific characterists of an system, and the SCLK frequency may be dictated by it own design constraints, thus changing the frequency ratio of CCLK to the frequency of SCLK. Additionally, some memory hubs 140 may be designed with a wider bus 134 than others. However, the ability to vary the number of lane groups clocked out of the data organization unit 180 each CCLK cycle can accommodate these changes without changing circuitry within the memory hub 140. The data organization unit 180 can be programmed to output a specific number of lanes each CCLK cycle by suitable means, such as through an I/O port during initialization.

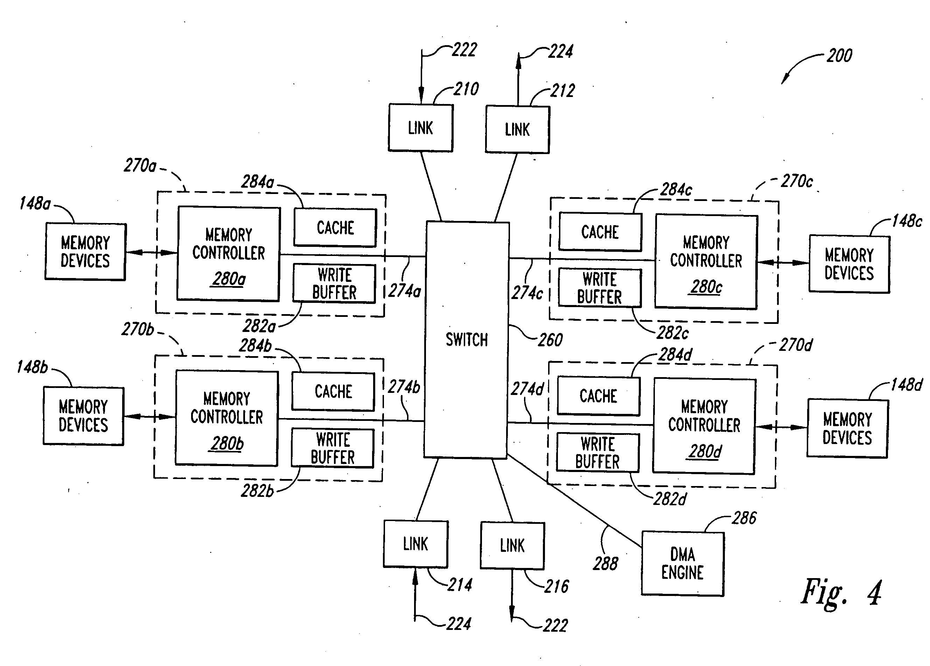

One example of a memory hub 200 that can organize data coupled to and from the memory devices 148 in the manner shown in Figure 3 is shown in Figure 4. The memory hub 200 includes a downstream receive interface 210, an upstream transmit interface 212, an upstream receive interface 214, and a downstream transmit interface 216. The downstream receive interface 210 is used to couple data into the memory module 130 from either the memory hub controller 128 (Figure 1) or an upstream memory module 130. The upstream transmit interface 212 is used to couple data from the memory module 130 to either the memory hub controller 128 or an upstream memory module 130. The upstream receive interface 214 is used to couple data into the memory module 130 from a downstream memory module 130. Finally, the downstream transmit interface 216 is used to couple data out of the memory module 130 to a downstream memory module 130. Significantly, the upstream transmit interface 212 includes a data organization system 220 that organizes a command header and data prior to being coupled to a high-speed upstream bus 224. The structure and operation of one example of the data organization system 220 will be explained with reference to Figure 5.

The interfaces 210-216 are coupled to a switch 260 through a plurality of bus and signal lines, represented by buses 228. The buses 228 are conventional, and include a write data bus coupled to the receiver interfaces 210, 224 and a read data bus coupled to the transmit interfaces 212, 222.

The switch 260 is coupled to four memory interfaces 270a-d which are, in turn, coupled to the memory devices 160 (Figure 1). By providing a separate and independent memory interface 270a-d for each set of memory devices 160, the memory hub 200 avoids bus or memory bank conflicts that typically occur with single channel memory architectures. The switch 260 is coupled to each memory interface through a plurality of bus and signal lines, represented by buses 274. In addition to coupling the interfaces 210-216 to the memory interfaces, the switch 260 can also couple the memory interfaces 210-216 to each other to allow memory packets to be coupled downstream or upstream through the memory module 130 to either another memory module 130 or the memory hub controller 128.

In an embodiment of the present invention, each memory interface 270a-d is specially adapted to the memory devices 148 (Figure 1) to which it is coupled. More specifically, each memory interface 270a-d is specially adapted to provide and receive the specific signals received and generated, respectively, by the memory devices 148 to which it is coupled. Also, the memory interfaces 270a-d are capable of operating with memory devices 148 operating at different clock frequencies. As a result, the memory interfaces 270a-d isolate the processor 104 from changes that may occur at the interface between the memory hub 200 and memory devices 148 coupled to the memory hub 200, and it provides a more controlled environment to which the memory devices 148 may interface.

The switch 260 can be any of a variety of conventional or hereinafter developed switches. For example, the switch 260 may be a cross-bar switch or a set of multiplexers that do not provide the same level of connectivity as a cross-bar switch but nevertheless can couple the bus interfaces 210-216 to each of the memory interfaces 470a-d. The switch 260 may also include arbitration logic (not shown) to determine which memory accesses should receive priority over other memory accesses. Bus arbitration performing this function is well known to one skilled in the art.

With further reference to Figure 4, each of the memory interfaces 270a-d includes a respective memory controller 280, a respective write buffer 282, and a respective cache memory unit 284. The memory controller 280 performs the same functions as a conventional memory controller by providing control, address and data signals to the memory devices 148 to which it is coupled and receiving data signals from the memory devices 148 to which it is coupled. However, the nature of the signals sent and received by the memory controller 280 will correspond to the nature of the signals that the memory devices 148 are adapted to send and receive. The cache memory unit 284 includes the normal components of a cache memory, including a tag memory, a data memory, a comparator, and the like, as is well known in the art. The memory devices used in the write buffer 282 and the cache memory unit 284 may be either DRAM devices, static random access memory ("SRAM") devices, other types of memory devices, or a combination of all three. Furthermore, any or all of these memory devices as well as the other components used in the cache memory unit 284 may be either embedded or stand-alone devices.

The write buffer 282 in each memory interface 270a-d is used to store write requests while a read request is being serviced. In such a system, the processor 104 can issue a write request to a system memory device even if the memory device 148 to which the write request is directed is busy servicing a prior write or read request. The write buffer 282 preferably accumulates several write requests received from the switch 260, which may be interspersed with read requests, and subsequently applies them to each of the memory devices 148 in sequence without any intervening read requests. By pipelining the write requests in this manner, they can be more efficiently processed since delays inherent in read/write turnarounds are avoided. The ability to buffer write requests to allow a read request to be serviced can also greatly reduce memory read latency since read requests can be given first priority regardless of their chronological order.

The use of the cache memory unit 284 in each memory interface 270a-d allows the processor 104 to receive data responsive to a read command directed to respective memory devices 148 without waiting for the memory devices 148 to provide such data in the event that the data was recently read from or written to that memory devices 148. The cache memory unit 284 thus reduces the read latency of the memory devices 148a-d to maximize the memory bandwidth of the computer system. Similarly, the processor 104 can store write data in the cache memory unit 284 and then perform other functions while the memory controller 280 in the same memory interface 270a-d transfers the write data from the cache memory unit 284 to the memory devices 148 to which it is coupled.

Further included in the memory hub 200 may be a self-test module 290 coupled to the switch 260 through a test bus 292. The self-test module 290 is further coupled to a maintenance bus 296, such as a System Management Bus (SMBus) or a maintenance bus according to the Joint Test Action Group (JTAG) and IEEE 1149.1 standards. Both the SMBus and JTAG standards are well known by those ordinarily skilled in the art. Generally, the maintenance bus 296 provides a user access to the self-test module 290 in order to set memory testing parameters and receive test results. For example, the user can couple a separate PC host via the maintenance bus 296 to set the relative timing between signals that are applied to the memory devices 148. Similarly, data indicative of the relative timing between signals that are received from the memory devices 148 can be coupled to the PC host via the maintenance bus 296.

Further included in the memory hub 200 may be a DMA engine 286 coupled to the switch 260 through a bus 288. The DMA engine 286 enables the memory hub 200 to move blocks of data from one location in one of the memory devices 148 to another location in the memory device without intervention from the processor 104. The bus 288 includes a plurality of conventional bus lines and signal lines, such as address, control, data buses, and the like, for handling data transfers in the system memory. Conventional DMA operations well known by those ordinarily skilled in the art can be implemented by the DMA engine 286.

The memory modules 130 are shown coupled to the memory hub controller 128 in a point-to-point coupling arrangement in which each portion of the high-speed buses 132, 134 are coupled only between two points. However, it will be understood that other topologies may also be used. For example, it may be possible to use a multi-drop arrangement in which a single downstream bus (not shown) and a single upstream bus (not shown) are coupled to all of the memory modules 130. A switching topology may also be used in which the memory hub controller 128 is selectively coupled to each of the memory modules 130 through a switch (not shown). Other topologies that may be used will be apparent to one skilled in the art.

One embodiment of the data organization system 220 used in the memory hub 200 of Figure 4 is shown in Figure 5. The data organization system 220 can also be used in the memory hub controller 128 to couple data to the high-speed downstream bus 222. The portions of receive interfaces 210, 224 (Figure 4) and a receive interface in the memory hub controller 128 that capture the memory packets from the high-speed buses 132, 134 is relatively straightforward, and the design of a suitable system is well within the ability of one skilled in the art.

The data organization system 220 includes a data buffer 230 that receives the 32-bit groups of data that are to be coupled through the high-speed buses 132, 134. In the case of the data organization system 220 in the memory hub controller 128, the source of the data may be the processor 104 (Figure 1) or any other memory access device. In the case of the memory modules 130, the data may originate from the memory devices 148 in the memory modules 130 or from another memory module 130. In any case, the groups of data are clocked into the data buffer 230 responsive to the core clock signal, as indicated schematically in Figure 5. As also schematically shown in Figure 5, the data stored in the data buffer 230 for different transactions are of different lengths.

Also included in the data organization system 220 is a command queue 234, which is a small buffer that stores the command headers for the memory packets. The command queue 234, which is also clocked by the core clock signal, interfaces with a number of other components that provide the information for the command headers, but these components have been omitted from Figure 5 in the interests of brevity and clarity.

Data stored in the data buffer 230 and the command headers stored in the command queue 234 are coupled to a multiplexer 236, which is controlled by an arbitration unit 238. The multiplexer 236 selects the data for one of the transactions stored in the data buffer 230 and selects the corresponding command header from the command queue 234. The arbitration unit 238 can cause the multiplexer to select the data and command header for the transaction based on a variety of algorithms. For example, the arbitration unit 238 may give priority to transactions that comprise responses from downstream memory modules 130 and thereby transmit such transactions upstream on the bus 224 (Figure 4) prior to transmitting local transactions from memory devices 148 in the memory module 130. Conversely, the arbitration unit 238 may give priority to transactions comprising local responses. Alternatively, the arbitration unit 238 may alternately transmit local transactions and downstream or upstream transactions. Most simply, the arbitration unit 238 could transmit transactions in the order that they are received by the memory hub 140. Although the arbitration unit 238 in each memory hub 140 preferably operates in the same manner, in alternative embodiments the arbitration units in difference memory hubs 140 may operate differently. Other variations in the operation of the arbitration unit 238 and logic circuitry for implementing the arbitration unit will be apparent to one skilled in the art.

Significantly, regardless of which order the arbitration unit 238 selects the transactions, the arbitration unit causes the multiplexer 236 to organize the command header and data for the selected transaction so that all lanes of a lane group 240 at the output of the multiplexer 236 are filled. The lane group 240 is then coupled to a parallel-to-serial converter 244, which may be, for example, a series of shift registers that are loaded in parallel. The data are then clocked out of the parallel-to-serial converter 244 by the system clock signal, and is passed to one of the high-speed buses 222, 224, as explained above with reference to Figure 3. By filling all of the lanes in each lane group 240, the entire data bandwidth of the high-speed buses 222, 224 is utilized.

From the foregoing it will be appreciated that, although specific embodiments of the invention have been described herein for purposes of illustration, various modifications may be made without deviating from the
scope of the claims. Accordingly, the invention is not limited except as by the appended claims.

## Claims

1. A data organization system, comprising:
a data organization unit (180) organizing a command header (CH) and data (D0 **-** D11) for each of a plurality of memory transactions into lane groups (190 - 198) each of which includes a plurality of lanes each of which contains a plurality of parallel command header bits or parallel data bits, the data organization unit organizing the lane groups so that all of the lanes in each lane group are filled with either command header bits or data bits; and
a parallel-to-serial converter (182) converting each of the lane groups into a serial stream of the lanes each of which contains a plurality of parallel command header bits or parallel data bits.

2. The data organization system of claim 1 wherein each of the lane groups comprise eight lanes.

3. The data organization system of claim 1 wherein each of the lanes comprise 32 parallel bits of command header or data.

4. The data organization system of claim 1, further comprising:
a data buffer (230) storing respective data for a plurality of the transactions, the data for each of the transactions being selectively passed from the data buffer; and
a command queue (234) storing respective command headers for a plurality of the transactions, the command header for each of the transactions being selectively passed from the command queue with the data for the corresponding transaction being passed from the data buffer.

5. The data organization system of claim 4, wherein the data organization unit further comprises:
a multiplexer (236) coupled to receive the data stored in the data buffer for each of the transactions and the command headers stored in the command queue for each of the transactions, the multiplexer being operable to couple the data for each of the transactions and the command header for each of the transactions to an output port responsive to multiplexer control signals;
an arbitration unit (238) coupled to at least one of the data buffer and the command queue to receive information indicative of the data and command headers for the transactions stored in the data buffer and command queue, respectively, the arbitration unit being operable to generate the control signals responsive to the information indicative of the data and command headers to cause the multiplexer to couple a lane group of either data or a command header and data for at least one of the transactions to the output port of the multiplexer.

6. The data organization system of claim 1 wherein the data organization unit is configurable to vary the number of lanes in each lane groups that are coupled from the data organization during each cycle of a clock signal.

7. A memory module (130), comprising:
a plurality of memory devices (148); and
a memory hub (200), comprising:
a memory controller (280) coupled to the memory devices;
at least one receive interface (210, 214) coupled to the memory controller; and
at least one transmit interface (212, 216) coupled to the memory controller to transmit memory transactions from the memory module, each transmit interface receiving memory transactions each of which comprises a command header and data having a variable number of data bits, each transmit interface including a data organization system as in claim 1 organizing the command header and data into lane groups each of which includes a plurality of lanes each of which contains a plurality of parallel command header bits or parallel data bits, the data organization system organizing the lane groups so that all of the lanes in each lane group are filled with either command header bits or data bits, the data organization system being operable to convert each of the lane groups into a serial stream of the lanes for transmission by the transmit interface, each of the transmitted lanes containing a plurality of parallel command header bits or parallel data bits.

8. The memory module of claim 7 wherein the at least one transmit interface (212, 216) comprises an upstream transmit interface and a downstream transmit interface each of which comprises the data organization system.

9. The memory module of claim 7 wherein the memory devices (148) comprise dynamic random access memory devices.

10. The memory module of claim 7 wherein the command header and data for each of the transactions comprise a memory packet.

11. A memory hub (200), comprising:
a memory controller (280);
at least one receive interface (210, 214) coupled to the memory controller; and
at least one transmit interface (212, 216) coupled to the memory controller to transmit memory transactions from the memory hub, each transmit interface receiving memory transactions each of which comprises a command header and data having a variable number of data bits, each transmit interface including a data organization system as in claim 1.

12. The memory hub of claim 11 wherein the at least one transmit interface (212, 216) comprises an upstream transmit interface and a downstream transmit interface each of which comprises the data organization system.

13. The memory hub of claim 11 wherein the memory devices (148) comprise dynamic random access memory devices.

14. The memory hub of claim 11 wherein the command header and data for each of the transactions comprise a memory packet.

15. A processor-based system (100), comprising:
a processor (104) having a processor bus;
a system controller (110) coupled to the processor bus, the system controller having a peripheral device port;
at least one input device (118) coupled to the peripheral device port of the system controller;
at least one output device (120) coupled to the peripheral device port of the system controller;
at least one data storage device (124) coupled to the peripheral device port of the system controller; and
a memory hub controller (128) coupled to the processor bus;
a plurality of memory modules (130) coupled to the memory hub controller by at least one bus, each of the memory modules comprising a memory module as in claim 7.

16. The processor-based system of claim 15 wherein the bus system comprises a downstream bus for coupling memory transactions transmitted by the memory modules away from the memory controller and an upstream bus for coupling memory transactions transmitted by the memory modules toward the memory controller, and wherein the transmit interface comprises an upstream transmit interface coupled to the upstream bus and a downstream transmit interface coupled to the downstream bus, each of the upstream and downstream transmit interfaces including a respective one of the data organization systems.

17. The processor-based system of claim 15 wherein the memory devices comprise dynamic random access memory devices.

18. The processor-based system of claim 15 wherein the command header and data for each of the transactions comprise a memory packet.

19. A method of transmitting memory transactions (T0 - T4) each of which comprises a command header (CH) and a variable amount of data (D0 - D11), the method comprising organizing the command header and data into lane groups (190 - 198) each of which contains a plurality of lanes of a predetermined size, each of the lanes containing a plurality of parallel command header bits or data bits, the lane groups being organizing so that all of the lanes in each lane group are filled with either command header bits or data bits.

20. The method of claim 19 further comprising converting each of the lane groups into a serial stream of the lanes each of which contains a plurality of parallel command header bits or parallel data bits.

21. The method of claim 19 wherein the act of organizing the command header and data into lane groups comprises organizing the command header and data into lane groups each of which contains eight lanes.

22. The method of claim 19 wherein the act of organizing the command header and data into lane groups each of which contains a predetermined number of lanes comprises organizing the command header and data so that each lane comprises 32 parallel bits of command header or data.

23. The method of claim 19, further comprising varying the number of lanes in each lane group.

24. A method of transmitting memory transactions each of which comprises a command header (CH) and a variable amount of data (D0 - D11), the method comprising:
organizing the command header and variable data into lane groups as in claim 19; and
transmitting each lane group of data as a serial stream of the lanes each of which includes the plurality of parallel command header bits or data bits.

## Patentansprüche

1. Datenorganisationssystem, aufweisend:
eine Datenorganisationseinheit (180), welche einen Befehlskopf (CH) und Daten (D0-D11) für jede einer Mehrzahl von Speichertransaktionen in Streifengruppen (190-198) organisiert, von denen jede eine Mehrzahl von Streifen beinhaltet, von denen jeder eine Mehrzahl von parallelen Befehlskopfbits oder parallelen Datenbits enthält, wobei die Datenorganisationseinheit die Streifengruppen derart organisiert,
dass alle der Streifen in jeder Streifengruppe mit entweder Befehlskopfbits oder Datenbits gefüllt sind; und
einen Parallel-Seriell-Konverter (182), der jede der Streifengruppen in einen seriellen Strom der Streifen konvertiert, von denen jeder eine Mehrzahl von parallelen Befehlskopfbits oder parallelen Datenbits beinhaltet.

2. Datenorganisationssystem nach Anspruch 1, wobei jede der Streifengruppen acht Streifen aufweist.

3. Datenorganisationssystem nach Anspruch 1, wobei jeder der Streifen 32 parallele Bits eines Befehlskopfs oder von Daten aufweist.

4. Datenorganisationssystem nach Anspruch 1, weiterhin aufweisend:
einen Datenpuffer (230), das jeweilige Daten für eine Mehrzahl der Transaktionen speichert, wobei die Daten für jede der Transaktionen selektiv von dem Datenpuffer durchgeleitet werden; und
eine Befehlswarteschlange (234), die jeweilige Befehlsköpfe für eine Mehrzahl der Transaktionen speichert, wobei der Befehlskopf für jede der Transaktionen selektiv von der Befehlswarteschlange mit den Daten für die entsprechende Transaktion, die von dem Datenpuffer durchgeleitet werden, durchgeleitet wird.

5. Datenorganisationssystem nach Anspruch 4, wobei die Datenorganisationseinheit weiterhin aufweist:
einen Multiplexer (236), der gekoppelt ist, die Daten, welche in dem Datenpuffer für jede der Transaktionen gespeichert sind, und die Befehlsköpfe, die in der Befehlswarteschlange für jede der Transaktionen gespeichert sind, zu empfangen, wobei der Multiplexer betreibbar ist, die Daten für jede der Transaktionen und den Befehlskopf für jede der Transaktionen zu einem Ausgangsanschluss in Reaktion auf Multiplexersteuersignale zu koppeln;
eine Entscheidungseinheit (238), welche mit dem Datenpuffer und/oder der Befehlswarteschlange gekoppelt ist, um Information zu empfangen, die bezeichnend für die Daten und Befehlsköpfe für die Transaktionen ist, die in dem Datenpuffer bzw. der Befehlswarteschlange gespeichert sind, wobei die Entscheidungseinheit betreibbar ist, die Steuersignale in Reaktion auf die Information zu generieren, die bezeichnend für die Daten und Befehlsköpfe ist, um den Multiplexer zu veranlassen, eine Streifengruppe von entweder Daten oder einem Befehlskopf und Daten für wenigstens eine der Transaktionen zu dem Ausgangsanschluss des Multiplexers zu koppeln.

6. Datenorganisationssystem nach Anspruch 1, wobei die Datenorganisationseinheit konfigurierbar ist, die Anzahl von Streifen in jeder Streifengruppe zu variieren, die von der Datenorganisation während jedes Zyklusses eines Taktsignals gekoppelt werden.

7. Speichermodul (130), aufweisend:
eine Mehrzahl von Speichervorrichtungen (148); und
einen Speicher-Hub (200), der aufweist:
einen Speichercontroller (280), der mit den Speichervorrichtungen gekoppelt ist;
wenigstens eine Empfangsschnittstelle (210, 214), die mit dem Speichercontroller gekoppelt ist; und
wenigstens eine Übertragungsschnittstelle (212, 216), die mit dem Speichercontroller gekoppelt ist, um Speichertransaktionen von dem Speichermodul zu übertragen, wobei jede Übertragungsschnittstelle Speichertransaktionen empfängt, von denen jede einen Befehlskopf und Daten mit einer variablen Anzahl von Datenbits aufweist, wobei jede Übertragungsschnittstelle ein Datenorganisationssystem nach Anspruch 1 enthält, welches den Befehlskopf und Daten in Streifengruppen organisiert, von denen jede eine Mehrzahl von Streifen beinhaltet, von denen jeder eine Mehrzahl von parallelen Befehlskopfbits oder parallelen Datenbits enthält, wobei das Datenorganisationssystem die Speichergruppen derart organisiert, dass alle der Streifen in jeder Streifengruppe mit entweder Befehlskopfbits oder
Datenbits gefüllt sind, wobei das Datenorganisationssystem betreibbar ist, jede der Streifengruppen in einen seriellen Strom der Streifen für eine Übertragung durch die Übertragungsschnittstelle zu konvertieren, wobei jeder der übertragenen Streifen eine Mehrzahl von parallelen Befehlskopfbits oder parallelen Datenbits beinhaltet.

8. Speichermodul nach Anspruch 7, wobei die wenigstens eine Übertragungsschnittstelle (212, 216) eine Aufwärts-Übertragungsschnittstelle und eine Abwärts-Übertragungsschnittstelle aufweist, von denen jede das Datenorganisationssystem aufweist.

9. Speichermodul nach Anspruch 7, wobei die Speichervorrichtung (148) Dynamic-Random-Access-Speichervorrichtungen aufweisen.

10. Speichermodul nach Anspruch 7, wobei der Befehlskopf und die Daten für jede der Transaktionen ein Speicherpaket aufweisen.

11. Speicher-Hub (200), aufweisend:
einen Speichercontroller (280);
wenigstens eine Empfangsschnittstelle (210, 214), die mit dem Speichercontroller gekoppelt ist; und
wenigstens eine Übertragungsschnittstelle (212, 216), die mit dem Speichercontroller gekoppelt ist, um Speichertransaktionen von dem Speicher-Hub zu übertragen, wobei jede Übertragungsschnittstelle Speichertransaktionen empfängt, von denen jede einen Befehlskopf und Daten mit einer variablen Anzahl von Datenbits aufweist, wobei jede Übertragungsschnittstelle ein Datenorganisationssystem wie in Anspruch 1 beinhaltet.

12. Speicher-Hub nach Anspruch 11, wobei die wenigstens eine Übertragungsschnittstelle (212, 216) eine Aufwärts-Übertragungsschnittstelle und eine Abwärts-Übertragungsschnittstelle aufweist, von denen jede das Datenorganisationssystem aufweist.

13. Speicher-Hub nach Anspruch 11, wobei die Speichervorrichtungen (148) Dynamic-Random-Access-Speichervorrichtungen aufweisen.

14. Speicher-Hub nach Anspruch 11, wobei der Befehlskopf und die Daten für jede der Transaktionen ein Speicherpaket aufweisen.

15. Prozessor-basiertes System (100), aufweisend:
einen Prozessor (104) mit einem Prozessorbus;
einen Systemcontroller (110), der mit dem Prozessorbus gekoppelt ist, wobei der Systemcontroller einen Anschluss für eine periphere Vorrichtung aufweist;
wenigstens eine Eingabevorrichtung (118), die mit dem Anschluss für die periphere Vorrichtung des Systemcontrollers gekoppelt ist;
wenigstens eine Ausgabevorrichtung (120), die mit dem Anschluss für die periphere Vorrichtung des Systemcontrollers gekoppelt ist;
wenigstens eine Datenspeichervorrichtung (124), die mit dem Anschluss für die periphere Vorrichtung des Systemcontrollers gekoppelt ist; und
einen Speicher-Hub-Controller (128), der mit dem Prozessorbus gekoppelt ist;
eine Mehrzahl von Speichermodulen (130), die mit dem Speicher-Hub-Controller durch wenigstens einen Bus gekoppelt sind, wobei jede der Speichermodule ein Speichermodul wie in Anspruch 7 aufweist.

16. Prozessor-basiertes System nach Anspruch 15, wobei das Bussystem einen Abwärts-Bus zur Kopplung von Speichertransaktionen aufweist, die durch die Speichermodule von dem Speichercontroller weg übertragen werden, und einen Aufwärts-Bus zur Kopplung von Speichertransaktionen, die von den Speichermodulen in Richtung des Speichercontrollers übertragen werden, und wobei die Übertragungsschnittstelle eine Aufwärts-Übertragungsschnittstelle aufweist, die mit dem Aufwärts-Bus gekoppelt ist, und eine Abwärts-Übertragungsschnittstelle, die mit dem Abwärts-Bus gekoppelt ist, wobei jede der Aufwärts- und Abwärts-Übertragungsschnittstellen ein jeweiliges der Datenorganisationssysteme beinhaltet.

17. Prozessor-basiertes System nach Anspruch 15, wobei die Speichervorrichtungen Dynamic-Random-Access-Speichervorrichtungen aufweisen.

18. Prozessor-basiertes System nach Anspruch 15, wobei der Befehlskopf und die Daten für jede der Transaktionen ein Speicherpaket aufweisen.

19. Verfahren zur Übertragung von Speichertransaktionen (T0-T4), von denen jede einen Befehlskopf (CH) und einen variablen Umfang von Daten (D0-D11) aufweist, wobei das Verfahren umfasst ein Organisieren des Befehlskopfs und der Daten in Streifengruppen (190-198), von denen jede eine Mehrzahl von Streifen einer vorbestimmten Größe beinhaltet, wobei jeder der Streifen eine Mehrzahl von parallelen Befehlskopfbits oder Datenbits beinhaltet, wobei die Streifengruppen so organisiert sind, dass alle der Streifen in jeder Streifengruppe mit entweder Befehlskopfbits oder Datenbits gefüllt sind.

20. Verfahren nach Anspruch 19, weiterhin aufweisend ein Konvertieren einer jeden der Streifengruppen in einen seriellen Strom der Streifen, von denen jeder eine Mehrzahl von parallelen Befehlskopfbits oder parallelen Datenbits enthält.

21. Verfahren nach Anspruch 19, wobei der Schritt des Organisierens des Befehlskopfs und der Daten in Streifengruppen ein Organisieren des Befehlskopfs und der Daten in Streifengruppen aufweist, von denen jede acht Streifen beinhaltet.

22. Verfahren nach Anspruch 19, wobei der Schritt des Organisierens des Befehlskopfs und der Daten in Streifengruppen, von denen jede eine vorbestimmte Anzahl von Streifen beinhaltet, ein Organisieren des Befehlskopfs und der Daten derart aufweist, dass jeder Streifen 32 parallele Bits eines Befehlskopfs oder von Daten aufweist.

23. Verfahren nach Anspruch 19, weiterhin aufweisend ein Variieren der Anzahl von Streifen in jeder Streifengruppe.

24. Verfahren zur Übertragung von Speichertransaktionen, von denen jede einen Befehlskopf (CH) und einen variablen Umfang von Daten (D0-D11) aufweist, wobei das Verfahren aufweist:
Organisieren des Befehlskopfs und der variablen Daten in Streifengruppen wie in Anspruch 19, und
Übertragen einer jeden Streifengruppe von Daten als einen seriellen Strom der Streifen, von denen jeder die Mehrzahl von parallelen Befehlskopfbits oder Datenbits beinhaltet.

## Revendications

1. Système d'organisation de données, comprenant :
une unité d'organisation de données (180) organisant un en-tête de sécurité (CH) et des données (D0 - D11) pour plusieurs transactions mémoire respectives en groupes de files (190, 198) dont chacun englobe plusieurs files contenant chacune plusieurs bits d'en-tête de sécurité parallèles ou bits de données parallèles, l'unité d'organisation de données organisant les groupes de files de telle sorte que la totalité des files dans chaque groupe de files sont remplies soit avec des bits d'en-tête de sécurité, soit avec des bits de données ; et
un convertisseur parallèle-série (182) convertissant chacun des groupes de files en un flux séquentiel des files contenant chacune plusieurs bits parallèles d'en-tête de sécurité ou plusieurs bits de données parallèles.

2. Système d'organisation de données selon la revendication 1, dans lequel chacun des groupes de files comprend huit files.

3. Système d'organisation de données selon la revendication 1, dans lequel chacune des files comprend 32 bits parallèles de données ou d'en-tête de sécurité.

4. Système d'organisation de données selon la revendication 1, comprenant en outre :
un tampon de données (230) qui garde en mémoire des données respectives pour plusieurs transactions, les données pour chacune des transactions étant transmises de manière sélective à partir du tampon de données ; et
une file d'attente de sécurité (234) qui garde en mémoire des en-têtes de sécurité respectives pour plusieurs transactions, l'en-tête de sécurité pour chacune des transactions étant transmise de manière sélective à partir de la file d'attente de sécurité et les données pour la transaction correspondante étant transmises à partir du tampon de données.

5. Système d'organisation de données selon la revendication 4, l'unité d'organisation de données comprenant en outre :
un multiplexeur (236) couplé pour recevoir les données mises en mémoire dans le tampon de données pour chacune des transactions et les en-têtes de sécurité mises en mémoire dans la file d'attente de sécurité pour chacune des transactions, le multiplexeur pouvant être activé pour coupler les données pour chacune des transactions et l'en-tête de sécurité pour chacune des transactions à un port de sortie en réponse à des signaux de commande du multiplexeur ;
une unité d'arbitrage (238) couplée à au moins un membre choisi parmi le groupe comprenant le tampon de données et la file d'attente de sécurité pour recevoir des informations fournissant des indications concernant les données et les en-têtes de sécurité pour les transactions mises en mémoire dans le tampon de données et dans la file d'attente de sécurité, respectivement, l'unité d'arbitrage pouvant être activée pour générer les signaux de commande en réponse aux informations fournissant des indications concernant les données et les en-têtes de sécurité pour faire en sorte que le multiplexeur couple un groupe de files, soit de données, soit d'un en-tête de sécurité et de données pour au moins une des transactions au port de sortie du multiplexeur.

6. Système d'organisation de données selon la revendication 1, dans lequel l'unité d'organisation de données peut être configurée pour faire varier le nombre de files dans chaque groupe de files qui sont couplées à partir de l'organisation de données au cours de chaque cycle d'un signal d'horloge.

7. Module mémoire (130) comprenant :
plusieurs dispositifs de mémoire (148) ; et
un concentrateur à mémoire (200) comprenant :
un contrôleur de mémoire (280) couplé aux dispositifs de mémoire ;
au moins une interface de réception (210, 214) couplée au contrôleur de mémoire ; et
au moins une interface d'émission (212, 216) couplée au contrôleur de mémoire pour transmettre des transactions mémoire à partir du module mémoire, chaque interface d'émission recevant des transactions mémoire comprenant chacune un en-tête de sécurité et des données possédant un nombre variable de bits de données, chaque interface d'émission englobant un système d'organisation de données selon la revendication 1 organisant les en-têtes de sécurité et les données en groupes de files dont chacun englobe plusieurs files contenant chacune plusieurs bits d'en-tête de sécurité parallèles ou bits de données parallèles, l'unité d'organisation de données organisant les groupes de files de telle sorte que la totalité des files dans chaque groupe de files sont remplies soit avec des bits d'en-tête de sécurité, soit avec des bits de données, le système d'organisation de données pouvant être activé pour convertir chacun des groupes de files en un flux séquentiel des files à des fins d'émission par l'interface d'émission, chacune des files émises contenant plusieurs bits parallèles d'en-tête de sécurité ou plusieurs bits de données parallèles.

8. Module mémoire selon la revendication 7, dans lequel au moins une interface d'émission (212, 216) comprend une interface d'émission en amont et une interface d'émission en aval, chacune comprenant le système d'organisation de données.

9. Module mémoire selon la revendication 7, dans lequel les dispositifs de mémoire (148) comprennent des dispositifs de mémoire vive dynamique.

10. Module mémoire selon la revendication 7, dans lequel l'en-tête de sécurité et les données pour chacune des transactions comprennent un paquet de données mémoires.

11. Concentrateur à mémoire (200) comprenant :
un contrôleur de mémoire (280) ;
au moins une interface de réception (210, 214) couplée au contrôleur de mémoire ; et
au moins une interface d'émission (212, 216) couplée au contrôleur de mémoire pour transmettre des transactions mémoire à partir du module mémoire, chaque interface d'émission recevant des transactions mémoire comprenant chacune un en-tête de sécurité et des données possédant un nombre variable de bits de données, chaque interface d'émission englobant un système d'organisation de données selon la revendication 1.

12. Concentrateur à mémoire selon la revendication 11, dans lequel ladite au moins une interface d'émission (212, 216) comprend une interface d'émission en amont et une interface d'émission en aval, chacune comprenant le système d'organisation de données.

13. Concentrateur à mémoire selon la revendication 11, dans lequel les dispositifs de mémoire (148) comprennent des dispositifs de mémoire vive dynamique.

14. Concentrateur à mémoire selon la revendication 11, dans lequel l'en-tête de sécurité et les données pour chacune des transactions comprennent un paquet de données mémoires.

15. Système (100) basé sur un processeur, comprenant :
un processeur (104) possédant un bus de processeur ;
un contrôleur système (110) couplé au bus de processeur, le contrôleur système possédant un port pour un dispositif périphérique ;
au moins un dispositif d'entrée (118) couplé au port du contrôleur système pour un dispositif périphérique ;
au moins un dispositif de sortie (120) couplé au port du contrôleur système pour un dispositif périphérique ;
au moins un dispositif de stockage de données (124) couplé au port du contrôleur système pour un dispositif périphérique ; et
un contrôleur de concentrateur à mémoire (128) couplé au bus de processeur ;
plusieurs modules mémoire (130) couplés au contrôleur du concentrateur à mémoire via au moins un bus, chacun des modules mémoire comprenant un module mémoire selon la revendication 7.

16. Système basé sur un processeur, selon la revendication 15, dans lequel le système de bus comprend un bus en aval pour le couplage de transactions mémoire émises par les modules mémoire à l'écart du contrôleur de mémoire et un bus en amont pour le couplage des transactions mémoire émises par les modules de mémoire en direction du contrôleur de mémoire, et dans lequel l'interface d'émission comprend une interface d'émission en amont couplée au bus en amont et une interface d'émission en aval couplée au bus en aval, chacune des interfaces d'émission en amont et en aval englobant un système respectif d'organisation des données.

17. Système basé sur un processeur selon la revendication 15, dans lequel les dispositifs de mémoire comprennent des dispositifs de mémoire vive dynamique.

18. Système basé sur un processeur selon la revendication 15, dans lequel l'en-tête de sécurité et les données pour chacune des transactions comprennent un paquet de données mémoires.

19. Procédé d'émission de transactions mémoire (T0 - T4) chacune comprenant un en-tête de sécurité (CH) et une quantité variable de données (D0 - D11), le procédé comprenant l'organisation de l'en-tête de sécurité et des données en groupes de files (190, 198) dont chacun contient plusieurs files possédant une dimension prédéterminée, chacune des files contenant plusieurs bits d'en-tête de sécurité parallèles ou bits de données parallèles, les groupes de files étant organisés de telle sorte que la totalité des files dans chaque groupe de files sont remplies soit avec des bits d'en-tête de sécurité, soit avec des bits de données.

20. Procédé selon la revendication 19, comprenant en outre la conversion de chacun des groupes de files en un flux séquentiel des files contenant chacune plusieurs bits d'en-tête de sécurité parallèles ou plusieurs bits de données parallèles.

21. Procédé selon la revendication 19, dans lequel l'activité d'organisation de l'en-tête de sécurité et des données en groupes de files comprend l'organisation de l'en-tête de sécurité et des données en groupes de files contenant chacun huit files.

22. Procédé selon la revendication 19, dans lequel l'activité d'organisation de l'en-tête de sécurité et des données en groupes de files qui contiennent chacun un nombre prédéterminé de files comprend l'organisation de l'en-tête de sécurité et des données de telle sorte que chaque file comprend 32 bits parallèles d'en-tête de sécurité ou de données.

23. Procédé selon la revendication 19, comprenant en outre le fait de faire varier le nombre de files dans chaque groupe de files.

24. Procédé d'émission de transactions mémoire comprenant chacune un en-tête de sécurité (CH) et un nombre variable de données (D0 - D11), le procédé comprenant le fait de :
organiser l'en-tête de sécurité et les données variables en groupes de files comme indiqué à la revendication 19 ; et
émettre chaque groupe de files de données sous la forme d'un flux séquentiel de files chacune englobant lesdits plusieurs bits parallèles d'en-tête de sécurité ou lesdits plusieurs bits de données parallèles.
